**Europäisches Patentamt**

**European Patent Office**

**Office européen des brevets**

(19)

(11) **EP 1 536 252 A1**

(12) **EUROPEAN PATENT APPLICATION**
published in accordance with Art. 158(3) EPC

(43) Date of publication:
**01.06.2005 Bulletin 2005/22**

(51) Int Cl.⁷: **G02B 6/12**, G02B 6/00, G02B 6/20

(21) Application number: **03741261.6**

(22) Date of filing: **08.07.2003**

(86) International application number:
**PCT/JP2003/008639**

(87) International publication number:
**WO 2004/005986 (15.01.2004 Gazette 2004/03)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.07.2002 JP 2002198337**

(71) Applicant: **Nippon Sheet Glass Company, Limited Osaka-shi, Osaka 541-8559 (JP)**

(72) Inventors:
• **KITTAKA, Shigeo,**
  **NIPPON SHEET GLASS COMPANY, LTD.**
  **Osaka-shi, Osaka 541-8559 (JP)**
• **OYA, Kazuaki,**
  **NIPPON SHEET GLASS COMPANY, LTD.**
  **Osaka-shi, Osaka 541-8559 (JP)**

• **NARA, Masatoshi,**
  **NIPPON SHEET GLASS COMPANY, LTD.**
  **Osaka-shi, Osaka 541-8559 (JP)**
• **TSUNETOMO, Keiji,**
  **NIPPON SHEET GLASS COMPANY, LTD.**
  **Osaka-shi, Osaka 541-8559 (JP)**
• **ASAI, Takahiro,**
  **NIPPON SHEET GLASS COMPANY, LTD.**
  **Osaka-shi, Osaka 541-8559 (JP)**

(74) Representative:
**Diehl, Hermann, Dr. Dipl.-Phys. et al**
**DIEHL, GLÄSER, HILTL & PARTNER**
**Patentanwälte**
**Augustenstrasse 46**
**80333 München (DE)**

(54) **PHOTONIC CRYSTAL OPTICAL WAVEGUIDE**

(57)    A photonic crystal optical waveguide includes a optical waveguide portion having a core made of a photonic crystal with a structure having a periodic refractive index in at least one direction perpendicular to a propagation direction of guided light and having a uniform refractive index in the propagation direction of the guided light, and a cladding arranged in contact with the core, in order to confine the guided light in the core, and an incident-side phase modulation portion arranged in close proximity or in contact with an incident surface of the core.

FIG.8

## Description

TECHNICAL FIELD

The present invention relates to optical waveguides using photonic crystals.

BACKGROUND ART

In recent years, research and development of new optical fibers referred to as holey fibers or photonic crystal fibers have progressed at a dramatic pace. In conventional optical fibers, the light is confined to the core portion by a simple refractive index difference. In contrast, these new optical fibers are characterized by having a complicated two-dimensional structure in their cross section. For example, the light can be confined in the core portion by establishing a refractive index difference between the cladding portion and the core portion by reducing the effective refractive index in the cladding portion through the arrangement of holes in the cladding portion. Alternatively, the light can be confined in the core portion by forming a photonic band gap with respect to the guided light in the core portion through making the cladding portion of a photonic crystal. Optical fibers are constituted by such means.

It is possible to change the characteristics of holey fibers and photonic crystal fibers considerably through their structure, so that applications such as dispersion compensation optical fibers with increased wavelength dispersion, optical fibers with large non-linear optical effects and zero dispersion optical fibers with zero dispersion in the visible spectrum have been proposed. Moreover, the complicated two-dimensional structures can be fabricated for example by heating and stretching a plurality of quartz pipes that are bundled together (see for example "O Plus E", vol. 23, No. 9, p. 1061, 2001)

In the holey fibers and photonic crystal fibers that have been proposed so far, single mode propagation with the 0-th mode is used for the guided light propagating through the core portion. In single mode propagation, there are extremely little changes of the refractive index with respect to the frequency. Consequently, it is not possible to attain the characteristics of group velocity anomalies or very large dispersion. Therefore, even though single mode propagation is a necessary condition to prevent wavelength dispersion due to multimode propagation, at the same time it also poses restrictions with regard to the core cross section area and the optical fiber performance.

DISCLOSURE OF THE INVENTION

It is an object of the present invention to solve the problems of the prior art and to provide a photonic crystal optical waveguide that can propagate the desired band propagation light.

A photonic crystal optical waveguide in accordance with the present invention includes a optical waveguide portion having a core made of a photonic crystal with a structure having a periodic refractive index in at least one direction perpendicular to a propagation direction of guided light and having a uniform refractive index in the propagation direction of the guided light, and a cladding arranged in contact with the core, in order to confine the guided light in the core, and an incident-side phase modulation portion arranged in close proximity or in contact with an incident surface of the core.

BRIEF DESCRIPTION OF THE DRAWINGS

FIG. 1 is a cross-sectional view showing a one-dimensional photonic crystal.
FIG. 2 is a band graph showing the photonic band structure of the TE polarized light in the one-dimensional photonic crystal.
FIG. 3 is a band graph showing the photonic band structure of the TM polarized light in the one-dimensional photonic crystal.
FIG. 4 is a perspective view showing the configuration of a photonic crystal optical waveguide.
FIG. 5 is a perspective view showing the configuration of an optical fiber using a two-dimensional photonic crystal.
FIG. 6 is a schematic diagram showing the intensity of the electric field of the first band propagation light in the Z-axis direction within the one-dimensional photonic crystal.
FIG. 7 is a schematic diagram showing the intensity of the electric field of the higher-order band propagation light in the Z-axis direction within the one-dimensional photonic crystal.
FIG. 8 is a cross-sectional view showing the configuration of a photonic crystal optical waveguide according to an embodiment of the present invention.
FIG. 9 is a diagram schematically showing the intensity in the Z-axis direction of the electric field of the guided light in the photonic crystal optical waveguide according to an embodiment of the present invention.
FIG. 10 is a schematic diagram showing the electric field of a photonic crystal optical waveguide in accordance to another embodiment of the present invention.
FIG. 11 is a cross-sectional view of a photonic crystal optical waveguide in accordance with another embodiment of the present invention.
FIG. 12 is a cross-sectional view of a photonic crystal optical waveguide in accordance with another embodiment of the present invention.
FIGS. 13A and 13B show band diagrams of one-dimensional photonic crystals in which two different alternating materials of the same thickness are stacked upon another.

FIGS. 14A and 14B are schematic diagrams of a two-dimensional photonic crystal having a multilayer structure.

FIG. 15 is a perspective view of a photonic crystal optical waveguide according to an embodiment of the present invention.

FIG. 16 is a perspective view showing an optical waveguide element compensating a phase difference in accordance with an embodiment of the present invention.

FIG. 17 is a schematic diagram of a photonic crystal optical fiber in accordance with an embodiment of the present invention.

FIG. 18 is a schematic diagram of a concentric circular photonic crystal optical fiber in accordance with an embodiment of the present invention.

BEST MODE FOR CARRYING OUT THE INVENTION

A photonic crystal optical waveguide according to an embodiment of the present invention can propagate waves associated with specific higher-order photonic bands. Thus, the function of the photonic crystal can be utilized with high efficiency.

In a photonic crystal optical waveguide according to a preferred embodiment of the present invention, there is a photonic band in the propagation direction of the light in the core, the incident-side phase modulation portion phase-modulates incident guided light and lets it propagate through the core of the optical waveguide portion, and the core propagates all or at least half of the energy of the phase-modulated guided light as a wave associated with higher-order photonic bands of said photonic bands. Thus, higher-order band propagation light with little loss due to first-order band propagation light can be caused to propagate through the core. Therefore, it is possible to use the photonic crystal optical waveguide as a dispersion compensation element or as an optical delay element, for example.

The incident-side phase modulation portion may be a phase grating having a refractive index period that is adjusted to the refractive index period of the core.

The incident-side phase modulation portion may be a phase grating having the same structure as the core, and having the same refractive index period as the core.

Preferably, the incident-side phase modulation portion is a portion separated by cutting an end portion vicinity on the incident surface side of the core. Thus, the incident-side phase modulation portion can be fabricated easily.

Moreover, the core may let a wave associated with the second coupled photonic band from the lowest order of the phase-modulated guided light propagate.

Also, it is preferable that the photonic crystal optical waveguide further comprises an emerging-side phase modulation portion arranged in close proximity or in contact with an emerging surface of the core from which the guided light emerges. Thus, the light emerging from the core can be changed into a plane wave.

Also, the emerging-side phase modulation portion may have a structure converting the light emerging from the emerging surface of the core into a plane wave.

The emerging-side phase modulation portion may be a phase grating having a refractive index period that is adjusted to the refractive index period of the core.

The emerging-side phase modulation portion may be a phase grating having the same structure as the core, and having the same refractive index period as the core.

Preferably, the emerging-side phase modulation portion is a portion separated by cutting an end portion vicinity on the emerging surface side of the core. Thus, the emerging-side phase modulation portion can be fabricated easily.

Also, it is preferable that the cladding is made of a photonic crystal having a periodic refractive index in at least one direction perpendicular to a propagation direction of the guided light and having a uniform refractive index in the propagation direction of the guided light. Thus, leaking of the light from the core can be prevented even when the effective refractive index of the core is low.

The core may comprise an active material having an optical non-linear effect. Thus, it is possible to provide an optical element with a large non-linear optical effect.

The core may be made of a multilayer film layer having a periodic refractive index in one or two directions perpendicular to the propagation direction of the guided light and having a uniform refractive index in the propagation direction of the guided light.

Preferably, the optical waveguide portion has a fiber shape with a substantially circular cross section, and the core is fiber-shaped with the cladding formed around the core, and the core and the cladding have a uniform refractive index in the propagation direction of the guided light. Thus, it is possible to provide a fiber-shaped dispersion compensation element or optical delay element, for example.

The refractive index periods of the core and the cladding may be symmetric with respect to the center axis of the optical waveguide portion, which is parallel to the propagation direction of the guided light.

Preferably, the optical waveguide portion comprises a fiber-shaped homogenous substance with a substantially circular cross section, a plurality of cavities are formed in the homogenous substance along its longitudinal direction, the plurality of cavities are formed symmetric to the center axis of the optical waveguide portion, which is parallel to the propagation direction of the guided light. Thus, it is possible to provide a fiber-shaped dispersion compensation element or optical delay element, for example.

All or some of the cavities may be filled with a fluid substance. The cavities may be filled with an acrylic monomer as the fluid substance, and irradiated with UV light from the outside to be polymerized into acrylic polymer.

The refractive index in the cross section of the optical waveguide portion may change periodically and in concentric circles with respect to a distance from the center axis of the optical waveguide portion, which is parallel to the propagation direction of the guided light.

The following is a detailed explanation of embodiments of the present invention.

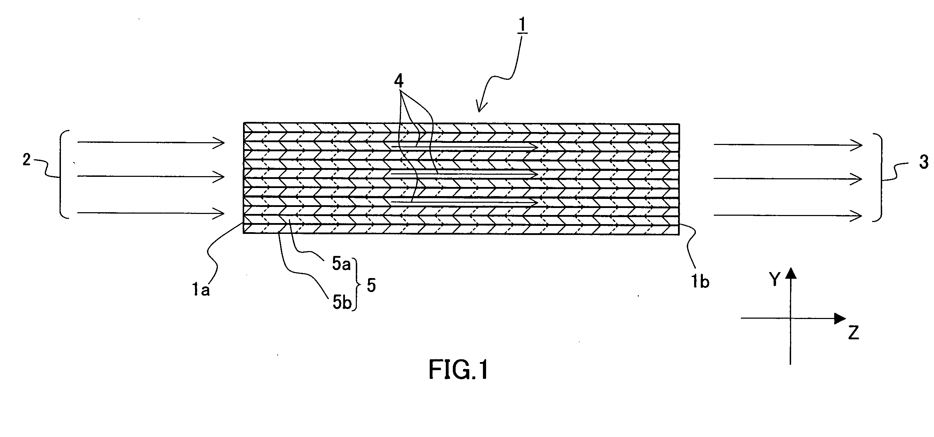

First, the propagation of light in a photonic crystal is explained. FIG. 1 is a cross-sectional view showing a one-dimensional photonic crystal 1. In FIG. 1, the Z-axis direction is the propagation direction of the light, and the Y-axis direction is a direction perpendicular to the propagation direction of the light. The one-dimensional photonic crystal 1 has a refractive index periodicity only in the Y-axis direction. More specifically, a material 5a and a material 5b with different refractive indices are layered one upon the other in alternation in the Y-axis direction, thus forming a multilayer structure 5. The refractive index is uniform in the propagation direction (Z-axis direction) of the light. The thickness of the material 5a is $t_A$, and its refractive index is $n_A$. Similarly, the thickness of the material 5b is $t_B$, and its refractive index is $n_B$. Consequently, with these layered upon one another, the photonic crystal 1 has a multilayer structure with a period "a". This period a is $(t_A + t_B)$.

In FIG. 1, the one-dimensional photonic crystal 1 constitutes a core, and air is arranged around it as a cladding (not shown in the drawings), thus constituting an optical waveguide. When a plane wave with a vacuum wavelength of $\lambda_0$ is incident as incident light 2 from a side face 1a of the one-dimensional photonic crystal 1 serving as the core, it is propagated as guided light 4 through the material 5a and the material 5b of the one-dimensional photonic crystal 1, and emerges as emergent light 3 from the side face 1b opposite from the side face 1a. In this situation, the manner in which the light propagates within the one-dimensional photonic crystal 1 can be determined by calculating and plotting the photonic bands. Methods of band calculation are described in detail in "Photonic Crystals", Princeton University Press (1995) and in Physical Review vol. B 44, No. 16, p. 8565, 1991, for example.

The photonic bands of the one-dimensional photonic crystal 1 shown in FIG. 1 are calculated by the above-mentioned band calculation. The calculation is performed under the assumption that the refractive index periodic structure continues infinitely in the Y-axis direction (the layering direction) and that the layers extend infinitely in the X-axis and the Z-axis directions (the directions in which the layer surfaces extend).

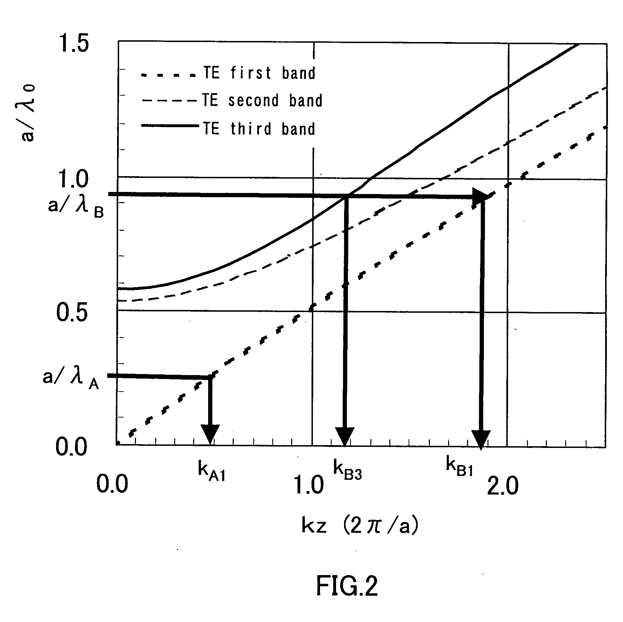

FIG. 2 is a band graph showing the photonic band structure of the TE polarized light in the one-dimensional photonic crystal 1 in FIG. 1. Moreover, FIG.

3 is a band graph showing the photonic band structure of the TM polarized light in the one-dimensional photonic crystal 1 in FIG. 1. It should be noted that the thickness $t_A$ and the refractive index $n_A$ of the material 5a as well as the thickness $t_B$ and the refractive index $n_B$ of the material 5b have the values noted below, where the thickness $t_A$ and the thickness $t_B$ are expressed in terms of the period a ($a = t_A + t_B$).

$$n_A = 1.44, \qquad t_A = 0.5a$$

$$n_B = 2.18, \qquad t_B = 0.5a$$

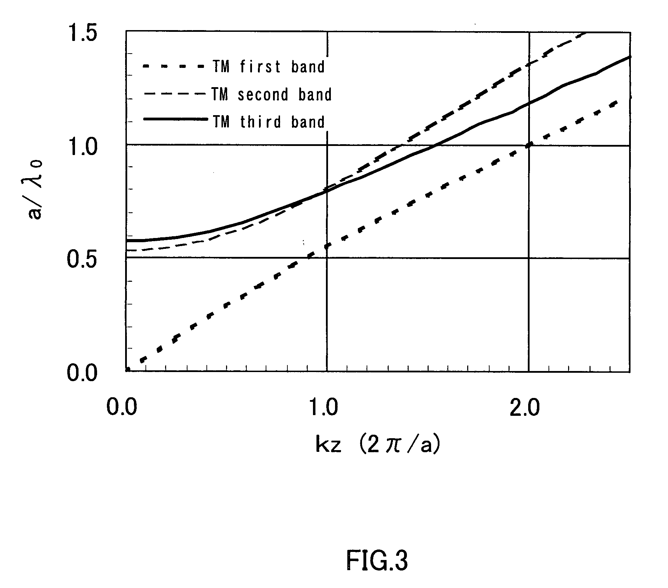

In the multilayer structure 5 of the period a in which layers of the material 5a and the material 5b are layered in alternation, the results of the band calculation for the first to third bands, calculated by the plane wave method for the Z-axis direction (same for X-axis direction), are shown in FIGS. 2 and 3. Here, TE polarized light is the polarized light whose electric field points in the X-axis direction, and the TM polarized light is the polarized light whose magnetic field points in the X-axis direction,

The horizontal axes in FIGS. 2 and 3 mark the size of the wave vector kz of the Z-axis direction in the one-dimensional photonic crystal 1, and the vertical axes mark the normalized frequency. The normalized frequency is given as $\omega a/2\pi c$, where $\omega$ is the angular frequency of the incident light, a is the period of the multilayer structure 5, and c is the speed of light in a vacuum. The normalized frequency can be expressed as $a/\lambda_0$, using the vacuum wavelength $\lambda_0$ of the incident light 2. In the following, the normalized frequency is expressed as $a/\lambda_0$, and it is also expressed this way in FIGS. 2 and 3. The one-dimensional photonic crystal 1 has no refractive index periodicity but a uniform refractive index in the Z-axis direction, so that the horizontal axis in FIGS. 2 and 3 spreads infinitely without any Brillouin zone boundary.

In FIG. 1, if the vacuum wavelength of the incident light 2 is $\lambda_A$, then there is a wave vector $k_{A1}$ corresponding to the lowest-order first band within the one-dimensional photonic crystal 1. In other words, the guided light 4 propagates in the Z-axis direction through the photonic crystal optical waveguide 1 as a wave with the wavelength $\lambda_{A1}=2\pi/k_{A1}$. The guided light 4 is in this case referred to as "first band propagation light" in the following.

Now, if incident light 2 with a vacuum wavelength of $\lambda_B$ is incident on the one-dimensional photonic crystal 1, then there are wave vectors $k_{B1}$ and $k_{B3}$ corresponding to the first and third bands. It should be noted that the second band is "uncoupled" with respect to the propagation in the Z-axis direction, so that it can be ignored. Consequently, a wave of first band propagation light with a wavelength $\lambda_{B1}=2\pi/k_{B1}$ and a wave of third band propagation light with a wavelength $\lambda_{B3}=2\pi/k_{B3}$ propagate in the Z-axis direction through the one-dimensional photonic crystal 1. Light of coupled bands that are not the lowest-order band (first band), such as the third band light in FIG. 2, is generally referred to as "light propagated in higher-order bands" in the following. Ordinarily, one of the second band and the third band is coupled and the other one is uncoupled, and the first band is coupled. A detailed explanation behind the theory of uncoupled bands can be found in "Optical Properties of Photonic Crystals" by K. Sakoda, Springer-Verlag (2001).

The foregoing was an explanation of TE polarized light with reference to FIG. 2, but as can be seen from FIG. 3, also for TM polarized light the relation is similar to that for TE polarized light, so that further explanations are omitted.

Here, the numeric value obtained by dividing the wavelength of light in vacuum ($\lambda_A$, $\lambda_B$, etc.) by the corresponding wavelength in the one-dimensional photonic crystal ($\lambda_{A1}$, $\lambda_{B3}$, etc.) is defined as the "effective refractive index." As can be seen from FIG. 2 and FIG. 3, the normalized frequency $a/\lambda_0$ (vertical axis) and kz (horizontal axis) of the first band light are substantially proportional, so that there is substantially no change of effective refractive index with respect to changes of the vacuum wavelength of the incident light. However, for light propagated in higher-order bands, the effective refractive index changes considerably depending on the vacuum wavelength of the incident light, and the effective refractive index may drop below 1, as becomes clear from FIGS. 2 and 3.

It is well known that the value obtained by differentiating the band curves by kz (that is, the slope of the tangent at the band curves) in the band diagrams shown in FIGS. 2 and 3 is the group velocity of the guided light 4. For higher-order bands of second and higher orders, the slope of the tangent becomes drastically smaller as the value of kz becomes small, and at kz=0, the slope of the tangent becomes zero. This is due to group velocity anomalies, which is a characteristic phenomenon in photonic crystals. The group velocity anomalies in photonic crystals are very large, and lead to a dispersion that is opposite to that in ordinary homogenous materials. That is to say, in photonic crystals, as the wavelength of the incident light becomes large, the group velocity slows down. Therefore, if an optical waveguide or an optical fiber utilizing light propagated in higher-order bands is made using a photonic crystal, then it can be utilized as an optical delay element or a dispersion compensation element in optical communication.

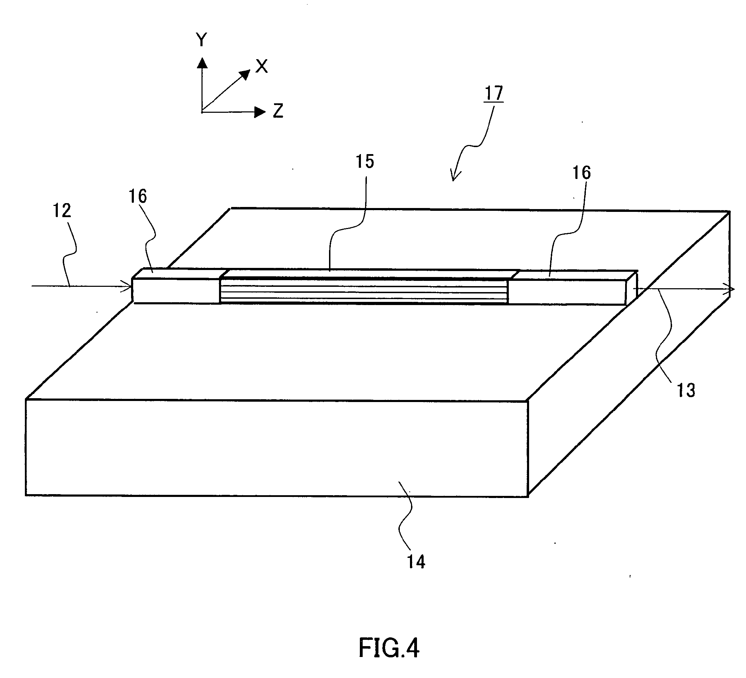

FIG. 4 is a perspective view showing the configuration of a photonic crystal optical waveguide 17, which is an optical waveguide element using the one-dimensional photonic crystal 15. The one-dimensional photonic crystal 15 is placed on a substrate 14, such that homogenous optical waveguides 16 are placed at both ends of it and the one-dimensional photonic crystal 15 is sandwiched by these homogenous optical waveguides 16. The one-dimensional photonic crystal 15 serves as the core, whereas the cladding is provided by the surrounding air and the substrate 14. The photonic crystal optical waveguide 17 shown in FIG. 4 is an optical waveguide element configured using the one-dimensional photonic crystal 15. It should be noted that in FIG. 4, the direction in which the light propagates is the Z-axis direction.

Incident light 12 is incident on one end of the photonic crystal optical waveguide 17. The incident light 12 is coupled into the homogenous optical waveguide 16, and is coupled from the homogenous optical waveguide 16 into the one-dimensional photonic crystal 15. The light propagates in the longitudinal direction (Z-axis direction), and emerges as emitted light 13 from the other end of the photonic crystal optical waveguide 17. When this light is higher-order band propagation light, then a group velocity anomaly of this higher-order band propagation light occurs in the one-dimensional photonic crystal 15. Thus, the photonic crystal optical waveguide 17 can be used as an optical delay element, for example.

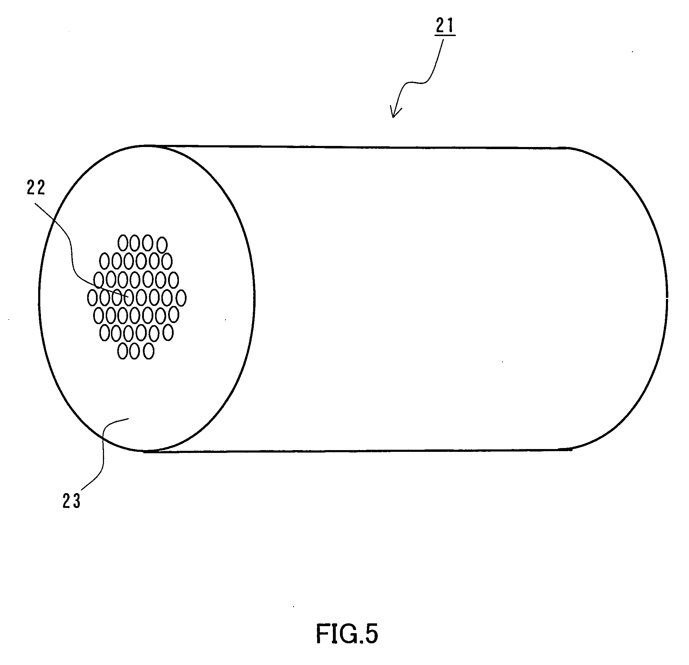

FIG. 5 is a perspective view showing the configuration of an optical fiber 21 using a two-dimensional photonic crystal. The optical fiber 21 has a columnar shape, and light is propagated in its axial direction. The optical fiber 21 is provided with a core 22 and a cladding 23 that is formed around the core 22. The core 22 is the two-dimensional photonic crystal having a uniform refractive index in the propagation direction of the light (in Z-axis direction), and a refractive index periodicity in the X-axis and the Y-axis direction. The cladding 23 is not made of a photonic crystal, but of an ordinary homogenous material. In the optical fiber 21 with this configuration, a similar band diagram as for the above-described one-dimensional photonic crystal is given for the propagation of light in the direction in which the core 22, which is a two-dimensional photonic crystal, has a uniform refractive index. Consequently, if higher-order band propagation light is propagated through the core 22 configured by this two-dimensional photonic crystal, then the optical fiber 21 can be used as an optical fiber attaining a strong dispersion compensation effect, for example.

However, there are a number of problems in using the photonic crystal optical waveguide 17 or the optical fiber 21 shown in FIGS. 4 and 5 as an optical waveguide or an optical fiber for higher-order band propagation light. As becomes clear from FIGS. 2 and 3, if higher-order band propagation light is propagated, first band propagation light is always propagated as well. The first band propagation light causes a loss of energy when trying to utilize the higher-order band propagation light, and leads to a considerable drop in the utilization efficiency of the incident light. Moreover, the first band propagation light has a different group velocity than the light propagated in higher-order bands, so that there is the problem that signals are subjected to a large wavelength dispersion.

Moreover, in FIG. 1, a refractive index structure that is periodic in the Y-axis direction and the X-axis direction is exposed at the end face 1b at which the light emerges from the one-dimensional photonic crystal 1. Therefore, also the higher-order band propagation light itself is periodic in intensity and phase, so that the emitted light 3 is mixed with diffraction light of various orders and directions. Consequently, it is difficult to handle the emitted light 3.

Furthermore, when the effective refractive index of the higher-order band propagation light becomes smaller than the refractive index of the surrounding medium (cladding) in contact with the one-dimensional photonic crystal 1, then the guided light 4 leaks out into the cladding. Thus, light may not be guided in the one-dimensional photonic crystal 1 at the core. In particular when the effective refractive index of the higher-order band propagation light is less than 1, there is the problem that it is not possible to prevent the leaking of light, even when the cladding is air.

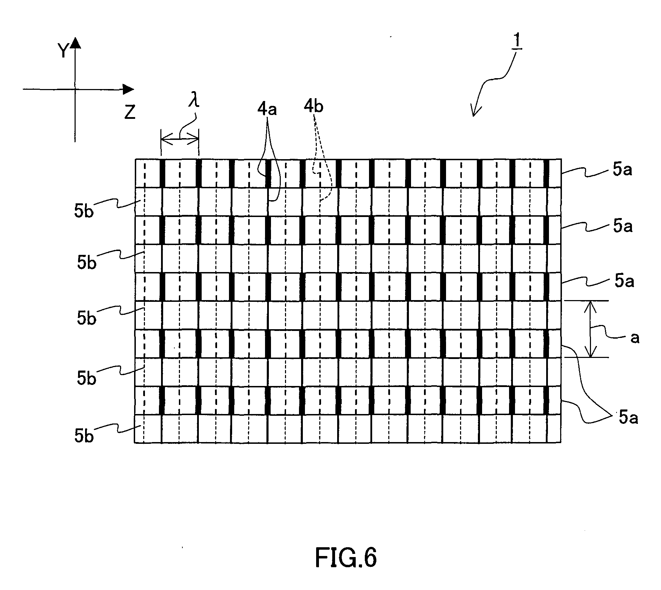

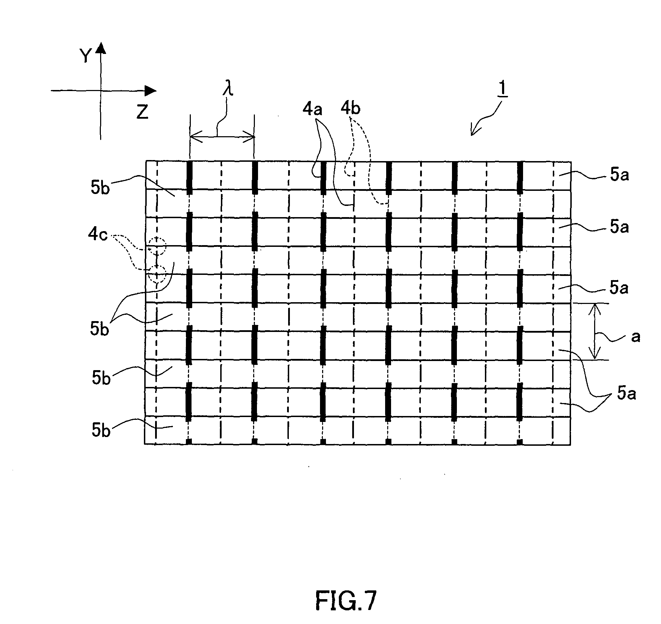

FIGS. 6 and 7 show the intensity of the electric field in the Z-axis direction of the guided light 4 in the one-dimensional photonic crystal 1 for the case that a plane wave is incident on the core from the end face 1a of the one-dimensional photonic crystal 1 in FIG. 1. FIG. 6 is a schematic diagram showing the intensity of the electric field of the first band propagation light in the Z-axis direction within the one-dimensional photonic crystal 1 shown in FIG. 1. FIG. 7 is a schematic diagram showing the intensity of the electric field of the higher-order band propagation light in the Z-axis direction within the one-dimensional photonic crystal 1 shown in FIG. 1. The electric field of the light is depicted in the form of waves. The wave crests 4a of the electric field are shown as solid lines, and the wave troughs 4b of the electric field are shown as dashed lines. Moreover, the size of the amplitude is expressed by the thickness of those lines, and a thicker line represents a larger amplitude. It should be noted that the wavelength of the guided light is λ.

As shown in FIG. 6, even though the electric field amplitude of the first band propagation light in the material 5a differs from that in the material 5b, the wave crests 4a and the wave troughs 4b of the electric field form planes perpendicular to the Z-axis direction, so that a propagation that is close to a plane wave is attained.

By comparison, in the higher-order band propagation light, "nodes 4c" at which the electric field amplitude becomes zero occur near the boundary of the material 5a and the material 5b, as shown in FIG. 7. Therefore, one period of the layered structure formed by the adjacent material 5a and material 5b is partitioned into two regions with a wave crest and a wave trough. Since the phases of the waves are shifted by half a wavelength at the adjacent regions (material 5a and material 5b), the wave crests and wave troughs are out of synch. It is in the second and the third band that these two nodes 4c per period occur. For the guided light in the higher-order bands, the number of nodes per period increases even more, and shifts by half a wavelength occur several times per period.

Consequently, for incident light of a wavelength at which a plurality of bands contribute, there are a plurality of propagated light modes, which overlap and form a complex electric field pattern. For example, with the incident light with a vacuum wavelength of $\lambda_B$ shown in FIG. 2 there is propagation light for the first band and the third band, so that there are a plurality of propagated light modes in the photonic crystal. Therefore, a complex propagation pattern results.

However, research by the inventors has shown that when incident light that has been subjected to a phase modulation is coupled into a photonic crystal with photonic bands in the propagation direction of the guided light, then it is possible to propagate only certain higher-order band propagation light. The photonic crystal optical waveguides according to embodiments of the present invention utilize this.

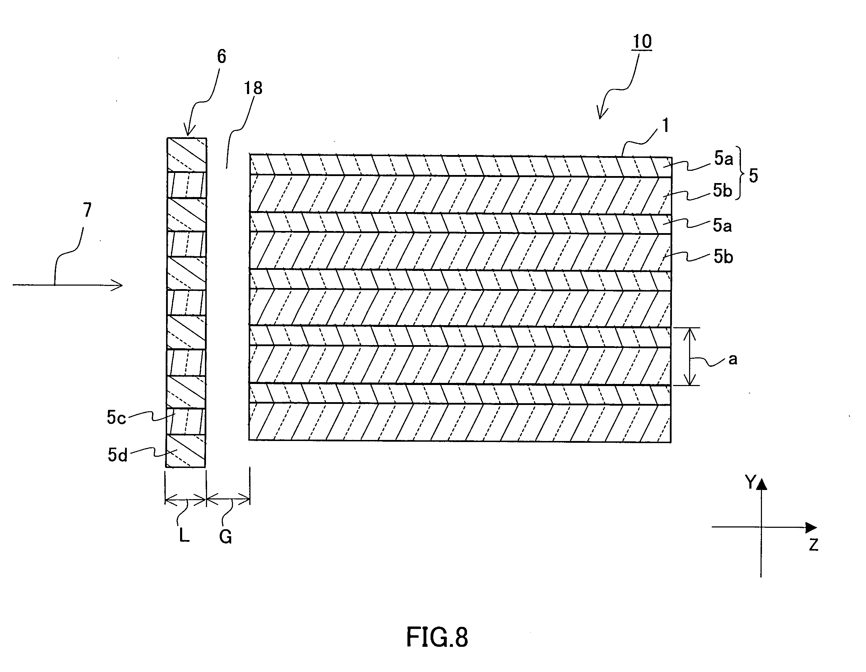

Referring to the drawings, the following is an explanation of photonic crystal optical waveguides according to embodiments of the present invention. FIG. 8 is a cross-sectional view showing the configuration of a photonic crystal optical waveguide 10 according to the present embodiment. As shown in FIG. 8, the photonic crystal optical waveguide 10 is provided with an optical waveguide portion and a phase grating 6, which is a phase modulation portion. The optical waveguide portion includes a core and a cladding. The core is constituted by a one-dimensional photonic crystal 1 having a refractive index structure that is periodic only in the Y-axis direction. The cladding is constituted by the air surrounding the core. In FIG. 8, the cladding is the air around the one-dimensional photonic crystal 1 serving as the core, so that it is not shown in the drawings. It should be noted that the cladding does not have to be air, and that it is also possible to take a suitable material as the cladding and arrange it around the one-dimensional photonic crystal 1.

The one-dimensional photonic crystal 1 is the same as the one shown in FIG. 1. That is to say, it has a multilayer structure 5, in which a material 5a and a material 5b with different refractive indices are layered in alternation in the Y-axis direction. In the Z-axis direction, which is the direction in which the light is propagated, the refractive index is uniform. The period "a" of the multilayer structure 5 is the sum of the thickness of the material 5a and the thickness of the material 5b. Moreover, the one-dimensional photonic crystal has photonic bands in the direction in which the guided light is propagated (the Z-axis direction). It should be noted that in the following diagrams, the Z-axis direction is the propagation direction of the light, and the Y-axis is the layering direction of the one-dimensional photonic crystal.

The phase grating 6 is arranged in close proximity or in contact with an end face of the one-dimensional photonic crystal 1 on which the light is incident. It is also possible that a space 18 is formed between the phase grating 6 and the one-dimensional photonic crystal 1, for example.

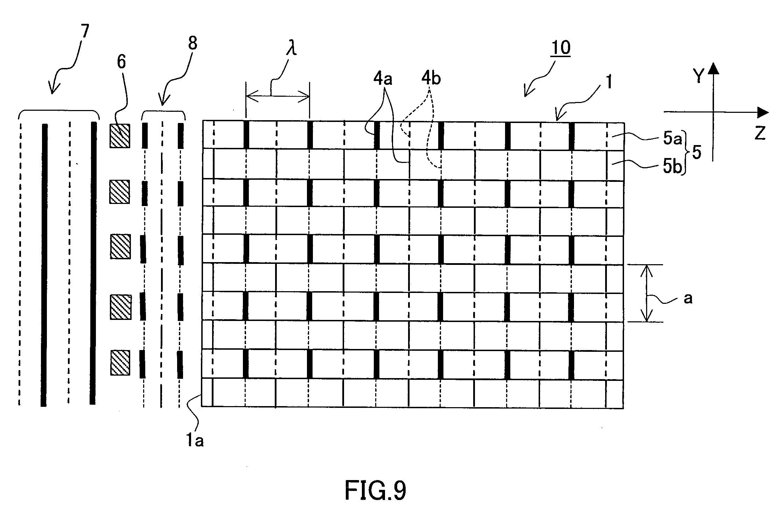

FIG. 9 is a diagram schematically showing the intensity of the electric field in the Z-axis direction of the guided light in the photonic crystal optical waveguide 10 of the present embodiment. In FIG. 9, the electric field of the light is depicted in the form of waves, and the wave crests 4a of the electric field are shown as solid lines, whereas the wave troughs 4b of the electric field are shown as dashed lines. Moreover, the size of the amplitude is expressed by the thickness of those lines, and a thicker line represents a larger amplitude.

The effect that the phase grating 6 has on the incident light (plane wave) is to cause a difference of about half a wavelength in the period a in the Y-axis direction. When the incident light 7, which is a plane wave, is incident on the phase grating 6, then an electric field pattern that is similar to the higher-order band propagation light in the one-dimensional photonic crystal shown in FIG. 7 forms in the space 18. The inventors found by simulation that when the light 8 having this electric field pattern is incident from the end face of the one-dimensional photonic crystal 1 and is transmitted inside the one-dimensional photonic crystal 1, then there is no light propagated in the first band, and only higher-order band propagation light is propagated. Thus, all or more than half of the energy of the wave propagated inside the one-dimensional photonic crystal 1 can be associated with the higher-order photonic bands.

This means that when a suitable phase-modulated wave having the same period in the same direction as the periodic structure of the photonic crystal is coupled into that photonic crystal, then it is possible to attain a propagation of light in specific bands only.

A phase grating 6 is used as the phase modulation portion, and the following is a more specific explanation of the parameters for the phase modulation portion.

The simplest phase modulation portion is a phase grating having the same period as the periodic multilayer films of the core constituted by the one-dimensional photonic crystal 1. The phase grating 6 can be configured by layering a material 5c and a material 5d with different refractive indices periodically in alternation, as shown in FIG. 8. The inventors found by simulation that it is preferable to optimize the phase grating 6.

For example, it is preferable to optimize the thicknesses tc and $t_D$ in the Y-axis direction of the material 5c and the material 5d in FIG. 8, the length L in the propagation direction (Z-axis direction) of the light of the phase grating 6, the thickness G in the Z-axis direction of the space 18, and the refractive index $n_G$ of the space 18. For the optimization of these, it is preferable to adjust, for example, the ratio between the thicknesses $t_A$ and $t_B$ of the materials 5a and 5b, which are characteristic for the multilayer structure 5 of the one-dimensional photonic crystal 1, or the refractive indices of the material 5a and the material 5b. It is preferable to synchronize the periods of the phase grating 6 and the one-dimensional photonic crystal 1. More specifically, it is preferable that the condition

$$t_A + t_B = t_C + t_D$$

is satisfied, and that the center in the Y-axis direction of the material 5a and the material 5c matches the center in the Y-axis direction of the material 5b and the material 5d, respectively. Thus, the periods of the phase grating 6 and the one-dimensional photonic crystal 1 are synchronized to be the same.

It is preferable that also the thickness G of the space 18 between the phase grating 6 and the one-dimensional photonic crystal 1 is chosen to be in a suitable range, because it affects the guided light.

Moreover, if the period a (=$t_A + t_B$) of the multilayer structure 5 is not greater than the vacuum wavelength $\lambda_0$ of the incident light 7, and an air layer is taken as the space 18 in the gap between the two, then the ±1-order diffraction light due to the phase grating 6 cannot propagate and the reflection light increases. One way to prevent this is to fill the space 18 with a medium with a large refractive index so as to increase the refractive index of the space 18. More specifically, a medium with a refractive index $n_G$ should be filled into the space 18, where $n_G$ is given by the following equation:

$$\lambda_0 / n_G < a$$

Here, if the condition $\lambda_0 / n_G < a$ is given, then it is preferable that the thickness G of the space 18 is not more than up to 5 times the wavelength ($\lambda_0/n_G$) within the medium. When the thickness G is too large, then the +1-order diffraction light and the -1-order diffraction light become too far away from one another, and the portion where interference waves are formed diminishes.

Even when the condition $\lambda_0/n_G < a$ is given, if the thickness G of the space 18 is almost zero (a tenth of $\lambda_0/n_G$ or less), then there are cases in which coupling of evanescent waves becomes possible.

It is also possible to form the phase grating 6 by cutting the one-dimensional photonic crystal 1 near the end face 1a on the incident side and separating it from the one-dimensional photonic crystal 1. The groove formed by this cutting between the one-dimensional photonic crystal 1 and the phase grating 6 thus becomes the space 18. In this case, adjusting the thickness of the cut portion (the thickness L of the phase grating 6) and the width of the groove (width G of the space 18) can ensure that only certain higher-order band propagation light is propagated. Needless to say, the groove may be an air layer, or it may be filled with a homogenous medium.

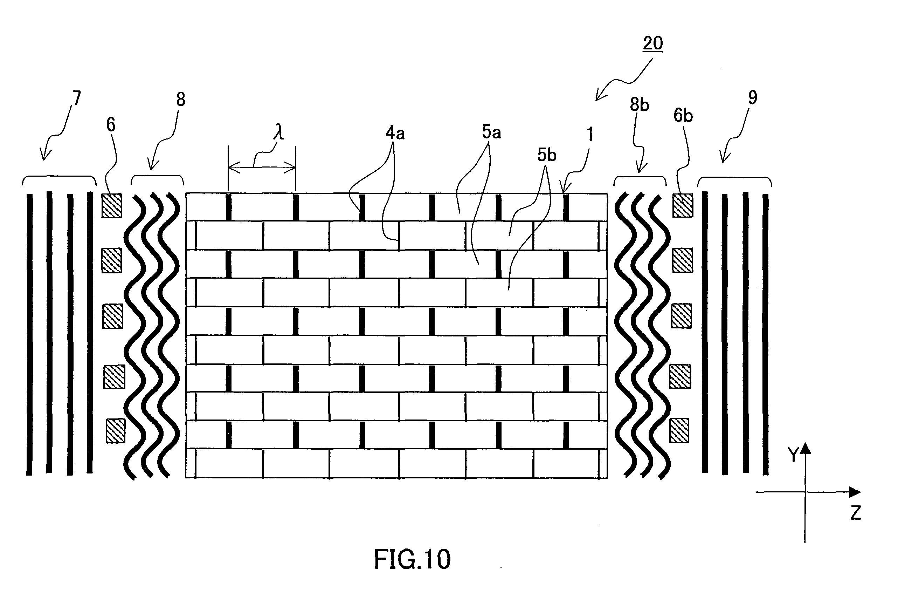

Furthermore, FIG. 10 is a schematic diagram showing the electric field of a photonic crystal optical waveguide 20 in accordance with another embodiment of the present invention. FIG. 10 shows a configuration of the photonic crystal optical waveguide 10 in FIG. 9, in which a phase grating 6b serving as a phase modulation portion that is similar to the above-described phase grating 6 arranged at the end face on the incident side is arranged in close proximity or in contact with the emerging side of the one-dimensional photonic crystal 1. A space is formed between the phase grating 6b and the one-dimensional photonic crystal 1. Thus, the emerging light 8b associated with specific bands that is emitted from the one-dimensional photonic crystal 1, is converted into a plane wave 9. That is to say, the emerging light 8b associated with specific bands that is emitted from the one-dimensional photonic crystal 1 is converted into a plane wave when it is incident on the phase grating 6b. It should be noted that in FIG. 10, only the portions of the wave crests 4a of the electric field are shown. It is preferable that the structure of the phase grating 6b is similar to that of the phase grating 6 in FIG. 8, and it is also preferable that the space between the photonic crystal 1 and the phase grating 6b is set in accordance with similar conditions as the space 18 in FIG. 8.

It is possible to attain a similar effect as with the above-described photonic crystal optical waveguides by taking the optical fiber 21 with a two-dimensional photonic crystal shown in FIG. 5 as the optical waveguide portion and placing phase modulation portions such as the phase gratings at both ends. In this case, the phase grating also should have a two-dimensional structure, similar to the optical fiber 21 serving as the optical waveguide portion. Thus, it is possible to realize propagation of only specific higher-order band propagation light, similar as with a one-dimensional photonic crystal.

Also in this case, when the effective refractive index of the higher-order band propagation light becomes smaller than the refractive index of the cladding 23 formed around the core 22, then propagated light may leak due to refraction from the core 22. In particular when the effective refractive index of the higher-order band propagation light is not greater than 1, it is not possible to prevent the leakage of light when the cladding is air.

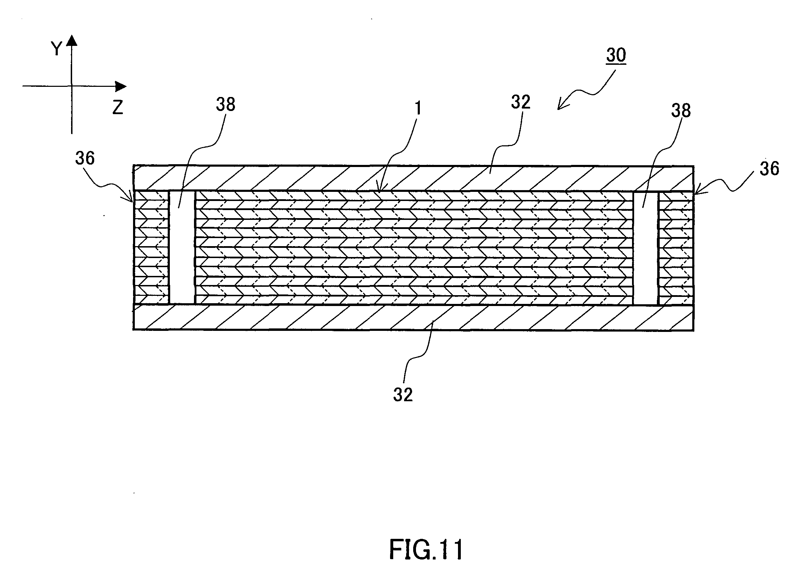

In order to prevent the leakage of guided light from the core due to a lowering of the effective refractive index and to confine the guided light in the core, it is preferable to provide a reflective layer 32, such as a metal film, as a cladding around the core made of the photonic crystal, as shown in FIG. 11 for example. FIG. 11 is a cross-sectional view of a photonic crystal optical waveguide 30 in accordance with another embodiment of the present invention. The photonic crystal optical waveguide 30 in FIG. 11 is provided with a core made of the one-dimensional photonic crystal 1 shown in FIG. 1, and phase gratings 36 arranged at the two end faces and separated from the core by spaces 38. Reflective layers 32, made of a metal film or the like, serving as the cladding are formed in contact with the one-dimensional photonic crystal 1, sandwiching the same. With this configuration, light leaking from the one-dimensional photonic crystal 1 serving as the core is reflected by the reflective layer 32 and is confined in the one-dimensional photonic crystal 1 serving as the core.

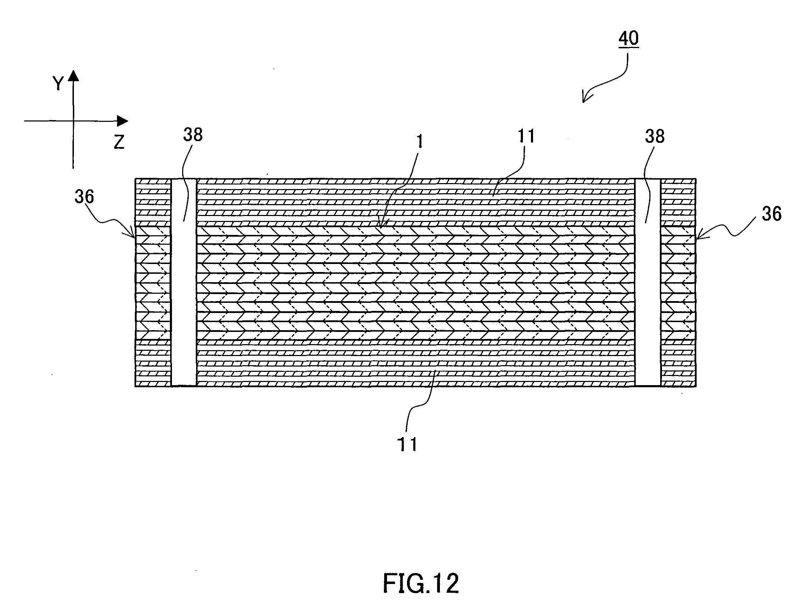

However, when reflective layers 32 are used for the cladding, problems may occur, such as a lowering of the strength of the photonic crystal optical waveguide 30 serving as the multilayer structure or attenuation due to insufficient reflectance at the reflective layers 32. FIG. 12 is a cross-sectional view of a photonic crystal optical waveguide 40 in accordance with another embodiment of the present invention. The photonic crystal optical waveguide 40 shown in FIG. 12 differs from the photonic crystal optical waveguide 30 shown in FIG. 11 in that not a reflective film, but a photonic crystal 11 is used for the cladding. As shown in FIG. 12, the photonic crystal optical waveguide 40 is provided with the photonic crystal 11 having a periodic refractive index as the cladding, instead of the reflective film. The photonic crystal 11 serving as the cladding has a refractive index periodicity in at least one direction perpendicular to the propagation direction of the guided light (Z-axis direction) and has a uniform refractive index in the direction in which the guided light is propagated. It should be noted that the structure of the photonic crystal 11 serving as the cladding is different from that of the one-dimensional photonic crystal 1 serving as the core, and also has a different refractive index period. Thus, the photonic band gaps of the photonic crystal 11 serving as the cladding are set to locations corresponding to the wave vector kz in the Z-axis direction of the propagation light of the one-dimensional photonic crystal 1 serving as the core. Therefore, a confinement of the guided light to the one-dimensional photonic crystal 1 can be realized.

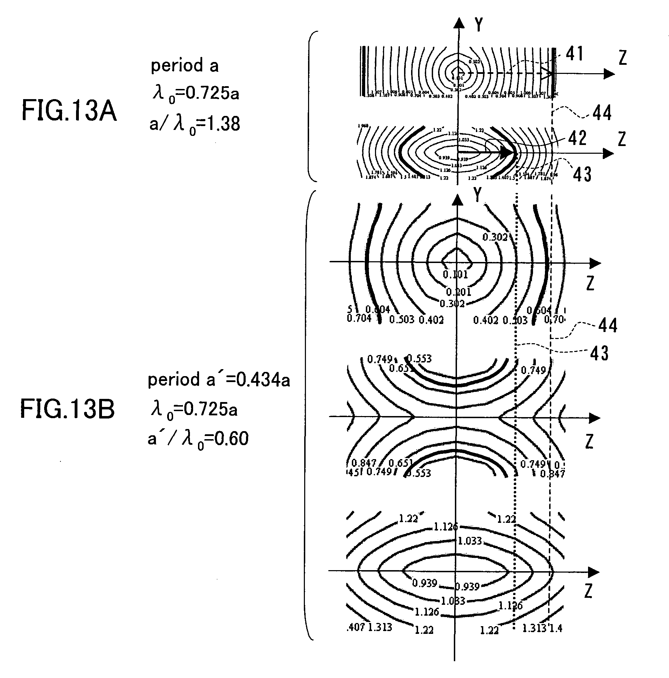

The following is an explanation of preferable conditions for the case that a photonic crystal 11 is used for the cladding. FIGS. 13A and 13B are band diagrams of one-dimensional photonic crystals in which two different materials of the same thickness are stacked upon another in alternation. The refractive indices of these two materials are 1.00 and 1.44, respectively. The period of the multilayer structure in FIG. 13A is set to a, and the period of the multilayer structure of the two types in FIG. 13B is set to a' = 0.434a. FIGS. 13A and 13B are both shown two-dimensionally on the same scale. The vertical direction corresponds to the Y-axis direction, and the first Brillouin zones are shown, band for band in the vertical direction, within the range of ±π/a and ±π/a' from the center. Moreover, the horizontal direction corresponds to the Z-axis direction (same as the X-axis direction), and there are no boundary lines of Brillouin zones, because there is no periodicity of the refractive index in this direction. The range for which the calculation was performed is shown to the left and the right in the figure, but there is no particular significance to this range.

The positions within the Brillouin zones signify the wave vector within the photonic crystal, and the contour lines signify bands corresponding to specific normalized frequencies $a/\lambda_0$ (or $a'/\lambda_0$). Incidentally, FIGS. 2 and 3 discussed above are one-dimensional representations for only a portion of such band diagrams (namely for the portion in positive Z-axis direction).

FIG. 13A shows bands corresponding to the wavelength $\lambda_0 = 0.725a$ ($a/\lambda_0 = 1.38$) with bold lines, for a one-dimensional photonic crystal with period a. Also, the wave vector representing the first band propagation light in the Z-axis direction is represented by a dashed arrow 41, whereas the wave vector representing the higher-order band propagation light in the Z-axis direction is represented by an arrow 42. Also, FIG. 13B shows the bands corresponding to the same wavelength ($\lambda_0 = 0.725a$ ($a' / \lambda_0 = 0.60$) with a bold line.

A dashed line 43 indicating the size of the arrow 42 representing the wave vector of the higher-order band propagation light and a dashed line 44 indicating the size of the dashed arrow 41 representing the wave vector of the first band propagation light are drawn to FIG. 13B. As can be seen from these drawings, there are no corresponding bands in FIG. 13B. In FIG. 13B, there are no bands corresponding to the wave vectors of the higher-order band propagation light in FIG. 13A (same as for the Z components). Consequently, the higher-order propagation bands in the crystal of the period a shown in FIG. 13A do not exist in the photonic crystal of the period a' shown in FIG. 13B.

Therefore, the optical waveguide portion may be configured taking a one-dimensional photonic crystal 1 with the period a as the core and arranging a photonic crystal 11 with a period a' on both sides thereof as the cladding, as shown in FIG. 12. In such an optical waveguide portion, the higher-order band propagation light that is propagated in the photonic crystal of period a cannot leak out to the photonic crystal of period a'. Consequently, it is possible to confine and propagate the light in the core constituted by the photonic crystal of period a.

The material and the structure of the photonic crystal 11 used for the cladding may differ from that of the one-dimensional photonic crystal 1 used for the core. However, in view of the effort involved in fabricating the multilayer structure, it is preferable to use the same material for both, and to make the refractive index period of the photonic crystal 11 used for the cladding smaller. Needless to say, it is necessary to design the photonic crystal optical waveguide after confirming by band calculation that the wave vectors in the core do not exist in the cladding.

It should be noted that according to FIGS. 13A and 13B, a band corresponding to the first band propagation light does not exist in FIG. 13B, so that also the first band propagation light is propagated in the one-dimensional photonic crystal 1. However, if the period a' of the photonic crystal 11 of the cladding or the structure of the multilayer film is adjusted, then the first band propagation light can be caused to leak from the one-dimensional photonic crystal 1 serving as the core, and the higher-order band propagation light can be confined. By designing such conditions through a band calculation, it is possible to achieve a photonic crystal optical waveguide in which light propagated in the first band can be completely purged midway.

Ordinarily, to determine the confinement with a band diagram, a photonic crystal with an infinite periodic structure is assumed. Therefore, if the confining photonic crystal has only for example three periods in practice, then the confinement may become insufficient, and the guided light leak to the outside. Needless to say, providing an unnecessarily large number of periods is undesirable with regard to cost as well as durability and precision of the multilayer film. In practice, it is preferable to determine the number of periods that is necessary at a minimum experimentally or through electromagnetic simulation.

The cases described so far related to confining higher-order band propagation light in a one-dimensional photonic crystal. Also in the case of two-dimensional photonic crystal optical fibers, it is possible to realize a confinement by enclosing the core portions with photonic crystals for cladding.

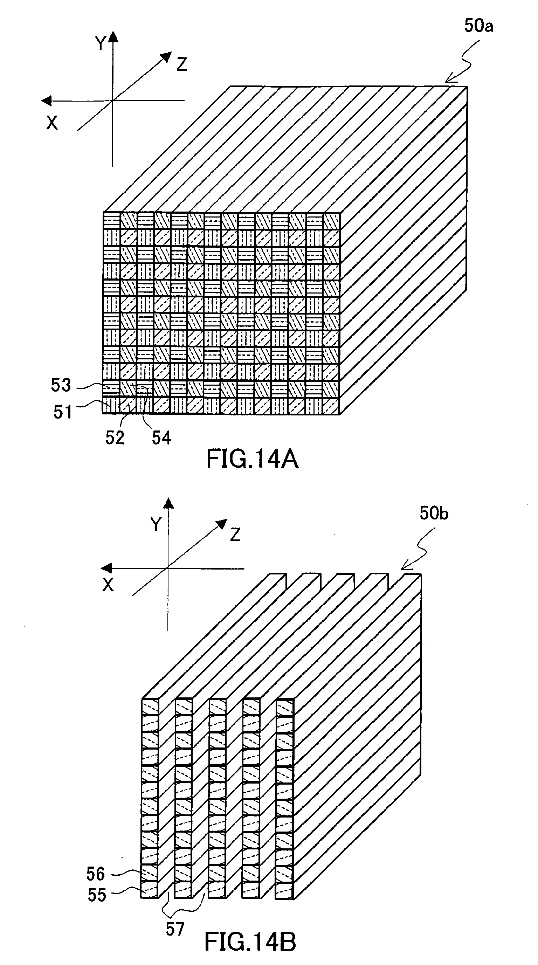

FIGS. 14A and 14B schematically show a two-dimensional photonic crystal serving as the multilayer structure. FIGS. 14A and 14B are examples of two-dimensional photonic crystals having a periodicity in both the X-axis direction and the Y-axis direction and no periodicity in the Z-axis direction. In the photonic crystal 50a in FIG. 14A, four types of media 51, 52, 53 and 54 are layered. These four types of media 51, 52, 53 and 54 are exposed at the XY cross section. The photonic crystal 50b of FIG. 14B is made of three types of media 55, 56 and 57. The photonic crystal 50b can be made easily by first layering two types of media 55 and 56 in the Y-axis direction, and then forming grooves that are parallel to the YZ plane periodically in the X-axis direction. In this case, the medium 57 is air, but it is also possible to fill the grooves with a medium other than air.

It is also possible to realize a photonic crystal optical waveguide according to an embodiment of the present invention by using these photonic crystals 50a and 50b for at least one of the core, the cladding and the phase grating.

The following is a more detailed explanation of the conditions to be satisfied by the present embodiment.

Although not shown in FIG. 9, the higher-order bands of the fourth band and above also show a similarly large wavelength dispersion as the second and third bands. However, towards higher orders of the bands propagating light, the number of nodes of the wave that are present per period in Y-axis direction increases, so that the pattern of the phase modulation becomes more complicated. Consequently, it is most desirable to use the second or the third band, in which there are two nodes per period, as the higher-order propagation band. Needless to say, it is not possible to utilize the "uncoupled" bands, so that the preferable band is the second coupled band counted from the lowest order. As noted above, the first band is coupled.

Moreover, a so-called "photonic crystal group velocity anomaly" occurs in the light propagated in the higher-order propagation bands, so that an increased non-linear effect can be expected. In the present embodiment, no energy is taken up by the first band light in which there is substantially no group velocity anomaly, so that it is possible to attain an increased effect of optical non-linearities by including non-linear optical material in the core portion of the multilayer film or the photonic crystal optical fiber. (See Optical Fiber Communication 2002/Conference and Exhibit Technical Digest ThK4 (p. 468))

For example, in the one-dimensional photonic crystal 15 serving as the core, as shown in FIG. 4, there is a large difference between the structure in the X-axis direction and in the Y-axis direction. Therefore, the effective refractive index and the group velocity differ depending on the polarization direction. This is clear from the fact that the characteristics in FIG. 2 (TE polarized light) differ from those in FIG. 3 (TM polarized light). Consequently, in the photonic crystal optical waveguides according to the present embodiment, it is preferable to insert a corrective birefringent element into the light path, in order to eradicate the difference between the polarization modes of the optical waveguide portion. It should be noted that it is possible to use, for example, a birefringent crystal, a structural birefringent element or a photonic crystal as the birefringent element.

As for the material of the photonic crystal used in the present embodiment, there is no particular limitation as long as its transparency can be ensured in the wavelength range used. Suitable materials for the one-dimensional case are silica, silicon nitride, silicon, titanium oxide, tantalum oxide, niobium oxide and magnesium fluoride, which are ordinarily used as the material for multilayer films and which have excellent durability and film-manufacturing costs. With these materials, a multilayer film structure can be formed easily by well-known methods, such as sputtering, vacuum deposition, ion assisted deposition or plasma CVD, for example. In the case of a two-dimensional photonic crystal fiber, the simplest configuration is one with air holes arranged in a quartz fiber.

As the ratio of the refractive indices between the materials constituting the photonic crystal becomes large, also the wavelength dispersion, for example, tends to increase. Consequently, it is preferable that the photonic crystal is constituted by a combination of high refractive index and low refractive index materials, for applications in which such characteristics are necessary. As for refractive index ratios that can be used in practice, when air, which has a refractive index of 1, is used as the low refractive index material and InSb, which has a refractive index of 4.21, is used as the high refractive index material, then a refractive index ratio greater than 4 can be attained (see "BISHOKOGAKU HANDBOOK" (Microoptics Handbook), p. 224, Asakura Shoten, 1995)

When the refractive index ratio of the materials constituting the photonic crystal becomes small, then the difference in the characteristics depending on the polarization direction tends to become small, so that it is advantageous to combine materials with a small refractive index ratio to realize non-dependency on polarization. However, when the refractive index ratio becomes very small, then the modulation effect becomes weak and the expected effects may not be attained, so that it is preferable to ensure a refractive index ratio of at least 1.2.

The space by which the optical waveguide portion and the phase grating portion are separated can be formed by first layering a multilayered film and fabricating a multilayer structure, and then successively performing the ordinary steps of applying a resist layer, patterning, etching and removing the resist layer. The groove portion shown in FIG. 8 (the space 18) may be filled with air, or it may be a vacuum. Thus, the space 18 will have a low refractive index. It is also possible to fill a medium into the space 18. As the medium filled into the space 18, it is possible to use an organic resin, glass in a sol state, or a molten semiconductor material or the like. It should be noted that sol-state glass can be turned into transparent glass by heating it after turning it into a gel.

By selecting suitable materials, it is possible to use the photonic crystal optical waveguide of the present embodiment for light of a typically used wavelength range of about 200 nm to 20 μm, and to attain satisfactory characteristics. Moreover, the present embodiment has been explained for light, but it can be applied not only for light but for electromagnetic radiation in general.

It should be noted that this is also the same for the space between the photonic crystal and the phase modulation portion if a phase modulation portion is arranged on the side of the emergent end of the photonic crystal.

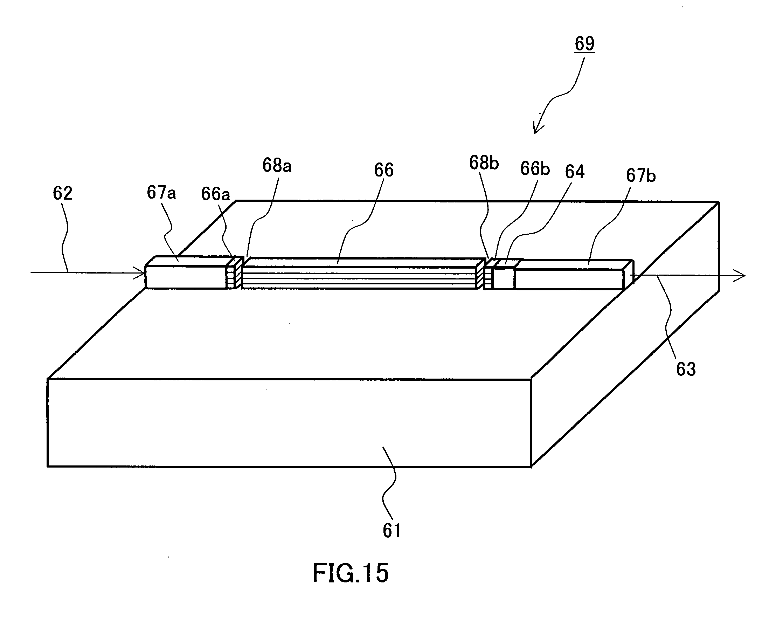

FIG. 15 is a perspective view of a photonic crystal optical waveguide according to an embodiment of the present invention.

The photonic crystal optical waveguide 69 has a substrate 61, a one-dimensional photonic crystal 66 serving as the core arranged on the substrate 61, and a phase grating 66a and a phase grating 66b arranged at the end faces on the incident side and the emergent side of the one-dimensional photonic crystal 66, with a space 68a and a space 68b arranged between the one-dimensional photonic crystal 66 and the phase grating 66a and the phase grating 66b. It should be noted that in practice, reflective layers (see FIG. 11 or FIG. 12) of a metal film or a one-dimensional photonic crystal are disposed above and below the one-dimensional photonic crystal 66, but this is not shown in the figure. Moreover, a homogenous optical waveguide 67a made of a homogenous material is placed on the outer side of the phase grating 66a. A birefringent element 64 and a homogenous optical waveguide 67b are placed on the outer side of the phase grating 66b. It should be noticed that the cladding is given by the air around the one-dimensional photonic crystal 66. Moreover, the phase grating 66a and the phase grating 66b were originally the end portions of the one-dimensional photonic crystal 66, and are made by cutting and separating the end portions of the one-dimensional photonic crystal 66.

The one-dimensional photonic crystal 66 can be fabricated, for example, by forming a periodic multilayer film on the entire surface of the substrate 61, and then etching away all of the multilayer film except for a line-shaped portion. It should be noted that the one-dimensional photonic crystal 66 has a uniform refractive index in the direction in which the light propagates, and has a periodic refractive index in the layering direction.

The incident light 62 (signal light) is coupled from an optical fiber or the like into the homogenous optical waveguide 67a. This signal light propagates through the homogenous optical waveguide 67a, passes through the phase grating 66a and is fed to the one-dimensional photonic crystal 66. A space 68a is formed between the phase grating 66a and the one-dimensional photonic crystal 66. As described above, the signal light is incident on the one-dimensional photonic crystal 66 serving as the core after passing through the phase grating 66a, so that the guided light propagating through the one-dimensional photonic crystal 66 is only higher-order band propagation light.

The higher-order band propagation light that is propagated through the one-dimensional photonic crystal 66 emerges from the emerging face of the one-dimensional photonic crystal 66 into the space 68b, is incident on the phase grating 66b, and is again converted into a plane wave by the phase grating 66b. The light that has been converted into a plane wave is fed from the phase grating 66b to the birefringent element 64, the phase shifts due to the polarization modes are compensated, and the light is fed into the homogenous optical waveguide 67b. The emerging light 63 that emerges after passing through the homogenous optical waveguide 67b is then coupled into an optical fiber, for example.

As noted above, the group velocity of the higher-order band propagation light changes considerably depending on the wavelength of the incident light, so that this photonic crystal optical waveguide 69 can be used for applications such as dispersion compensation elements or optical delay elements of signal light for optical communication. Moreover, propagated light with slow group velocity increases the non-linear optical effects, as noted above. The following lists a number of ways in which it can be used as an element with a much larger non-linear optical effect than in conventional elements. For example, it is possible to increase the non-linear optical effect by doping the portion of the one-dimensional photonic crystal 66 with microscopic particles of a substance having a non-linear optical effect. More specifically, it is possible to disperse microscopic particles and use the effect of quantum dots.

As another method, it is possible to increase the non-linear optical effect by placing a thin-film layer including a substance exhibiting a non-linear optical effect at every single period of the one-dimensional photonic crystal 66. More specifically, it is possible to fabricate at least one side of the thin-film layers by a sol-gel method, and to let them include an organic pigment or an organic substance with photorefractivity.

Another method is to increase the non-linear optical effect by taking a material with non-linear effect for the material from which the one-dimensional photonic crystal 66 is made. More specifically, the material of the one-dimensional photonic crystal may be a substance with large non-linearity, such as $LiNbO_3$ or the like.

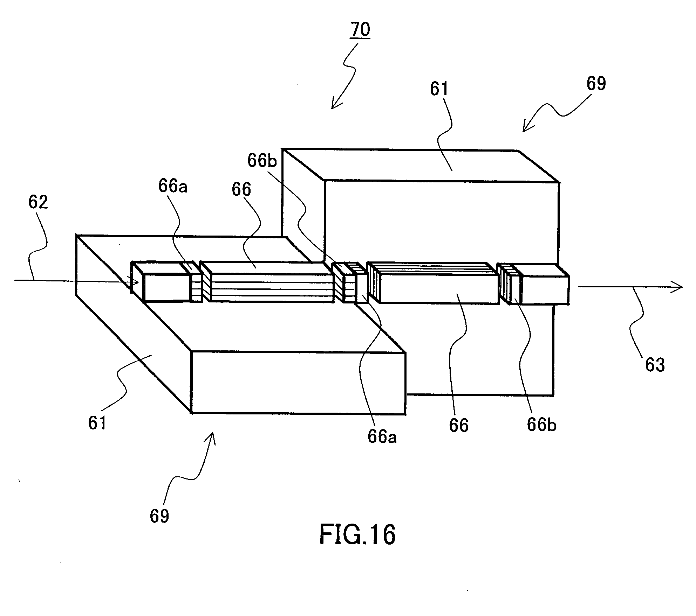

FIG. 16 is a perspective view showing an optical waveguide element 70 compensating a polarization-dependent phase difference. In FIG. 16, two of the photonic crystal optical waveguides 69 shown in FIG. 15 are used. One of the photonic crystal optical waveguides 69 is rotated relative to the other by 90° around the propagation direction of the light, and connected to it. It should be noted that the homogeneous waveguide on the emerging side of the photonic crystal optical waveguide 69 placed at the incident side (on the left in FIG. 16) and the homogeneous waveguide on the incident side of the photonic crystal optical waveguide 69 placed at the emerging side (on the right in FIG. 16) may be omitted, as shown in FIG. 16. Moreover, also the birefringent element that was used in FIG. 15 is omitted. The two one-dimensional photonic crystal optical waveguides 69 are connected by the phase grating 66b on the emerging side and the phase grating 66a on the incident side.

The TE polarization components and the TM polarization components of the plane wave incident on the photonic crystal optical waveguide 69 on the incident side have different group velocities and wavelengths in the waveguide, so that there is a phase difference, an intensity difference, and a difference in the non-linear effect. However, by letting the wave pass through the photonic crystal optical waveguide 69 on the emerging side, which has the same structure and length as the photonic crystal optical waveguide 69 on the incident side and is only rotated by 90° relative to it, the phase difference, the intensity difference, and the difference in the non-linear effect are canceled. Consequently, there are no polarization-dependent differences in the optical waveguide element 70 in FIG. 16.

Instead of the one-dimensional photonic crystal 66 shown in FIG. 15, it is also possible to use a two-dimensional photonic crystal that is periodic in both the Y-axis direction and the X-axis direction, as shown in FIGS. 14A and 14B, for example. In this case, it is possible to eliminate polarization mode dependent differences by optimizing the structure. Needless to say, in this case, also the phase gratings fabricated by cutting the two-dimensional photonic crystal serving as the core have a two-dimensional structure.

It should be noted that, as shown in FIG. 14B, making the photonic crystal two-dimensional can be easily achieved by forming grooves parallel to the Z-axis direction by means of etching the layers of a multilayer film.

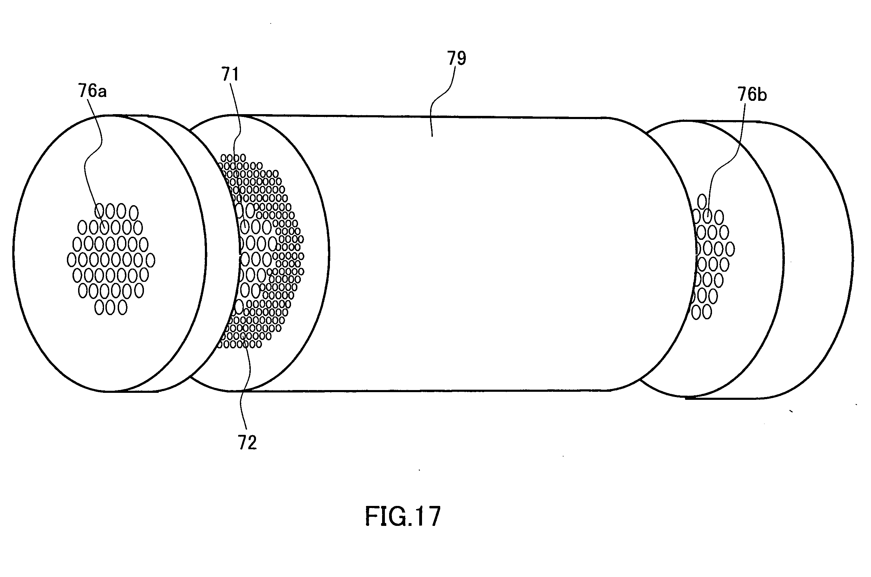

FIG. 17 is a schematic diagram of a photonic crystal optical fiber in accordance with an embodiment of the present invention.

The optical fiber 79 serving as the optical waveguide portion of the photonic crystal optical waveguide is made of a core 71 having a two-dimensional photonic crystal structure, and a cladding 72 formed around that. It should be noted that the refractive index is uniform in the direction in which light is propagated. Phase lattices 76a and 76b matching the period of the core 71 are placed at the two ends of the optical fiber 79. The incident light (plane wave, not shown in the drawings) propagates through the core 71 as higher-order band propagation light, and is restored to a plane wave on the emerging side. The lattice elements on both sides are the same, so that the optical fiber can be used in both directions.

It should be noted that it is preferable that the refractive index period of the core 71 and the cladding 72 is symmetric with respect to the center axis of the optical fiber 79. This has the advantage that polarization mode dependent differences do not occur.

The photonic crystal of the cladding 72 of the optical fiber 79 has a period and a structure that are different from the photonic crystal of the core 71, and serves the role of confining the guided light in the core 71 through photonic band gaps. It should be noted that it is sufficient if the cladding 72, which is made of a photonic crystal, has a thickness at which the light is confined in the core 71, and it is not necessary to form the photonic crystal all the way to the outer circumference of the optical fiber 79.

The light guided by the optical fiber 79 is higher-order band light, so that there is a much greater group velocity anomaly than with conventional optical fibers using single mode propagation with the lowest order band. Consequently, it is possible to attain a strong dispersion compensation effect and non-linear optical effect.

Moreover, the core 71 has a periodic structure and its size is not limited, so that it is easy to realize a core 71 with a large diameter, and the connection of fibers can be simplified.

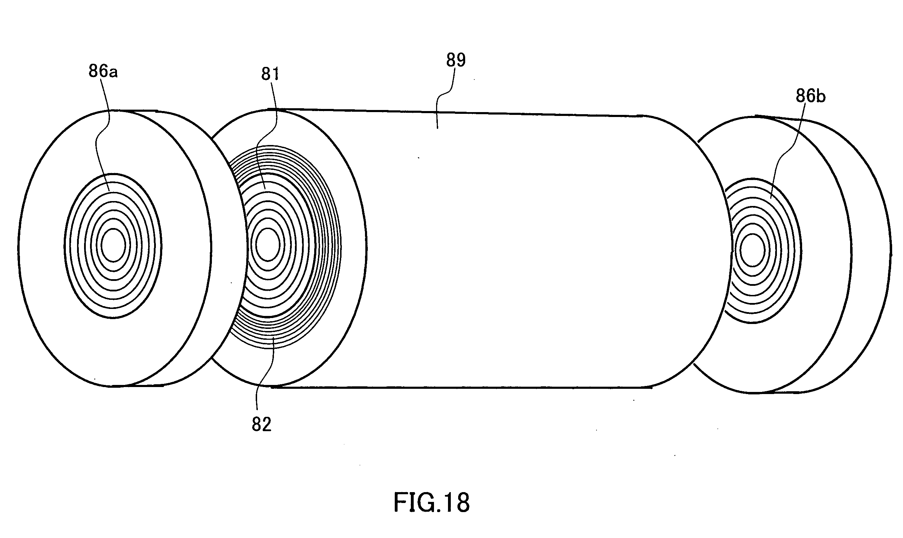

FIG. 18 is a schematic diagram of a concentric circular photonic crystal optical fiber 89 in accordance with an embodiment of the present invention.

The optical fiber 89 has a periodic refractive index distribution in the radial direction. The optical fiber 89 is constituted by a core 81 and a cladding 82 which are made of a two-dimensional photonic crystal having a periodic and concentric circular refractive index period with respect to the distance from the center axis. It should be noted that the refractive index is uniform in the direction in which light is propagated. Phase lattices 86a and 86b matching the period of the core 81 are placed at the two ends of the optical fiber 89. The incident light (not shown in the drawings), which is a plane wave, propagates through the core 81 as higher-order band propagation light, and is again restored to a plane wave on the emerging side. The phase gratings 86a and 86b on both sides are the same, so that the incident and the emerging directions also can be reversed.

The cladding 82 has a refractive index period that is different from that of the core 81, and serves the role of confining the guided light in the core 81 through photonic band gaps.

The optical fiber 89 is symmetric with respect to the optical axis, so that there is the advantage that there are no polarization mode dependent differences. The effect due to the group velocity anomalies and the fact that there are no restrictions regarding the size of the core portion are the same as in the optical fiber 79 of FIG. 17.

Also, the optical fibers 79 and 89 in FIGS. 17 and 18 can be fabricated by forming cavities in a fiber-shaped homogenous material having a substantially circular cross section and forming a periodic refractive index with the homogenous material and air. It should be noted that a plurality of cavities should be formed along the longitudinal direction of the fiber-shaped homogenous material. The cavities should be parallel to the guided light. It is furthermore possible to fill a fluid substance into all or some of the cavities, and to form different refractive index periods. For example, it is possible to fill acrylic monomers as the fluid substance, irradiate UV light from outside, and polymerize the acrylic monomers.

It should be noted that the configurations shown in detail in the foregoing embodiments are mere examples, and that the present invention is not limited by these specific examples. For example, the photonic crystal serving as the core of the optical waveguide of the present embodiments has a refractive index that is uniform in the direction in which light is propagated, and has a periodic refractive index in at least one direction perpendicular to the propagation direction. Also, there should be photonic bands in the direction in which the guided light propagates.

INDUSTRIAL APPLICABILITY

As explained above, the present invention can be applied widely to optical elements that can utilize such effects as dispersion compensation and optical non-linearity caused by group velocity anomalies of higher-order band propagation light.

**Claims**

1. A photonic crystal optical waveguide, comprising:

    a optical waveguide portion having a core made of a photonic crystal with a structure having a periodic refractive index in at least one direction perpendicular to a propagation direction of guided light and having a uniform refractive index in the propagation direction of the guided light, and a cladding arranged in contact with the core, in order to confine the guided light in the core; and
    an incident-side phase modulation portion arranged in close proximity or in contact with an incident surface of the core.

2. The photonic crystal optical waveguide according to claim 1,
    wherein there is a photonic band in the propagation direction of the light in the core;
    wherein the incident-side phase modulation portion phase-modulates incident guided light and lets it propagate through the core of the optical waveguide portion; and
    wherein the core propagates all or at least half of the energy of the phase-modulated guided light as a wave associated with higher-order photonic bands of said photonic bands.

3. The photonic crystal optical waveguide according to claim 1, wherein the incident-side phase modulation portion is a phase grating having a refractive index period that is adjusted to the refractive index period of the core.

4. The photonic crystal optical waveguide according to claim 1, wherein the incident-side phase modulation portion is a phase grating having the same structure as the core, and having the same refractive index period as the core.

5. The photonic crystal optical waveguide according to claim 1, wherein the incident-side phase modulation portion is a portion separated by cutting an end portion vicinity on the incident surface side of the core.

6. The photonic crystal optical waveguide according to claim 2, wherein the core lets a wave associated with the second coupled photonic band from the lowest order of the phase-modulated guided light propagate.

7. The photonic crystal optical waveguide according to claim 1, further comprising an emerging-side phase modulation portion arranged in close proximity or in contact with an emerging surface of the core from which the guided light emerges.

8. The photonic crystal optical waveguide according to claim 7, wherein the emerging-side phase modulation portion converts the light emerging from the emerging surface of the core into a plane wave.

9. The photonic crystal optical waveguide according to claim 7, wherein the emerging-side phase modulation portion is a phase grating having a refractive index period that is adjusted to the refractive index period of the core.

10. The photonic crystal optical waveguide according to claim 7, wherein the emerging-side phase modulation portion is a phase grating having the same structure as the core, and having the same refractive index period as the core.

11. The photonic crystal optical waveguide according to claim 7, wherein the emerging-side phase modulation portion is a portion separated by cutting an end portion vicinity on the emerging surface side of the core.

12. The photonic crystal optical waveguide according to claim 1, wherein the cladding is made of a photonic crystal having a periodic refractive index in at least one direction perpendicular to a propagation direction of the guided light and having a uniform refractive index in the propagation direction of the guided light.

13. The photonic crystal optical waveguide according to claim 1, wherein the core comprises an active material having an optical non-linear effect.

14. The photonic crystal optical waveguide according to claim 1, wherein the core is made of a multilayer film layer having a periodic refractive index in one or two directions perpendicular to the propagation direction of the guided light and having a uniform refractive index in the propagation direction of the guided light.

**15.** The photonic crystal optical waveguide according to claim 12,
wherein the optical waveguide portion has a fiber shape with a substantially circular cross section, and the core is fiber-shaped with the cladding formed around the core; and
wherein the core and the cladding have a uniform refractive index in the propagation direction of the guided light.

**16.** The photonic crystal optical waveguide according to claim 15,
wherein the refractive index periods of the core and the cladding are symmetric with respect to the center axis of the optical waveguide portion, which is parallel to the propagation direction of the guided light.

**17.** The photonic crystal optical waveguide according to claim 16,
wherein the optical waveguide portion comprises a fiber-shaped homogenous substance with a substantially circular cross section, a plurality of cavities are formed in the homogenous substance along its longitudinal direction, and the plurality of cavities are formed symmetric to the center axis of the optical waveguide portion, which is parallel to the propagation direction of the guided light.

**18.** The photonic crystal optical waveguide according to claim 17,
wherein all or some of the cavities are filled with a fluid substance.

**19.** The photonic crystal optical waveguide according to claim 16,
wherein the refractive index in the cross section of the optical waveguide portion changes periodically and in concentric circles with respect to a distance from the center axis of the optical waveguide portion, which is parallel to the propagation direction of the guided light.

FIG.1

FIG.2

EP 1 536 252 A1

FIG.3

FIG.4

21

22

23

FIG.5

FIG.6

FIG.7

FIG.8

EP 1 536 252 A1

FIG.9

FIG.10

EP 1 536 252 A1

FIG.11

FIG.12

EP 1 536 252 A1

FIG.13A

period a
$\lambda_0 = 0.725a$
$a/\lambda_0 = 1.38$

FIG.13B

period a´ = 0.434a
$\lambda_0 = 0.725a$
$a´/\lambda_0 = 0.60$

50a

Y
Z
X

53
51
52 54

FIG.14A

50b

Y
Z
X

56
55
57

FIG.14B

FIG.15

EP 1 536 252 A1

FIG.16

EP 1 536 252 A1

FIG.17

FIG.18

**INTERNATIONAL SEARCH REPORT**

International application No.

PCT/JP03/08639

A. CLASSIFICATION OF SUBJECT MATTER
Int.Cl⁷ G02B6/12, G02B6/00, G02B6/20

According to International Patent Classification (IPC) or to both national classification and IPC

B. FIELDS SEARCHED

Minimum documentation searched (classification system followed by classification symbols)
Int.Cl⁷ G02B6/12, G02B6/00, G02B6/20

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JOIS (JSTPLUS)

C. DOCUMENTS CONSIDERED TO BE RELEVANT

| Category* | Citation of document, with indication, where appropriate, of the relevant passages | Relevant to claim No. |
|---|---|---|
| Y | Shigeo KITTAKA et al., "ID Photonic Kessho ni yoru Hacho Bunsan", Dai 49 Kai Oyo Butsurigaku Kankei Rengo Koenkai Koen Yokoshu, 2002 March, No.3, page 1035 (28p-ZF-14) | 1,2,6-8, 12-19 |
| Y | EP 1184708 A2 (NIPPON SHEET GLASS CO., LTD.), 06 March, 2002 (06.03.02), Full text; all drawings & JP 2002-236206 A & US 2002/27655 A1 | 1,7,8,12-19 |
| Y | EP 1211531 A2 (NIPPON SHEET GLASS CO., LTD.), 05 June, 2002 (05.06.02), Full text; all drawings & JP 2002-169022 A | 1,7,8,12-19 |

☒ Further documents are listed in the continuation of Box C. ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 October, 2003 (29.10.03) | 11 November, 2003 (11.11.03) |

| Name and mailing address of the ISA/ Japanese Patent Office | Authorized officer |
|---|---|
| Facsimile No. | Telephone No. |

Form PCT/ISA/210 (second sheet) (July 1998)

**EP 1 536 252 A1**

## INTERNATIONAL SEARCH REPORT

International application No.

PCT/JP03/08639

C (Continuation). DOCUMENTS CONSIDERED TO BE RELEVANT

| Category* | Citation of document, with indication, where appropriate, of the relevant passages | Relevant to claim No. |
|---|---|---|
| Y | Masayuki SHIRANE, Hirohito YAMADA, "Photonik Kessho ni okeru Hikari Tokaritsu no Tanmen Iso Izonsei", Dai 49 Kai Oyo Butsurigaku Kankei Rengo Koenkai Koen Yokoshu, 2002 March, No.3, page 1036 (28p-ZF-16) | 1,2,6-8, 12-19 |
| Y | Daisuke OZAKI, Tomoo KOMEHANA, Toshihiko BABA, "2jigen Photonic Kessho no Muhanshaka ni Taisuru ichikosatsu", Dai 47 Kai Oyo Butsurigaku Kankei Rengo Koenkai Koen Yokoshu, 2000 March, No.3, page 1056 (28p-P5-3) | 1,2,12-19 |
| Y | EP 1184690 A2 (FUJI PHOTO FILM CO., LTD.), 06 March, 2002 (06.03.02), Full text; all drawings; particularly, Fig. 5 & JP 2002-71981 A & US 2002/41425 A1 | 1,2,12-19 |
| Y | WO 99/64904 A1 (BROENG, Jes; BARKOU, Stig, Eigil; BJARKLEV, Andres, Overgaard), 16 December, 1999 (16.12.99), Full text; all drawings; particularly, Fig. 6 & JP 2002-517794 A | 12-19 |
| Y | KERBAGE, C. et al., Air-silica microstructure fiber based variable optical attenuator device. In: Optical Fiber Communication Conference and Exhibit 2002(OFC 2002) Technical Digest, March, 2002, pages 468 to 469 (ThK4) | 13 |
| Y | WO 00/06506 A1 (CORNING INC.), 10 February, 2000 (10.02.00), Full text; all drawings; particularly, Claim 4 & JP 2002-521306 A & US 6260388 B1 & CN 1311763 T | 18 |
| Y | US 5802236 A (LUCENT TECHNOLOGIES INC.), 01 September, 1998 (01.09.98), Full text; all drawings; particularly, Fig. 4 & JP 10-95628 A & EP 810453 A1 & DE 69707201 E | 19 |
| E,X | US 2003/142385 A1 (Shigeo KITTAKA, Kazuaki OYA, Masatoshi NARA), 31 July, 2003 (31.07.03), Full text; all drawings & JP 2003-215362 A | 1-11 |
| E,X | JP 2003-287633 A (NIPPON SHEET GLASS CO., LTD.), 10 October, 2003 (10.10.03), Full text; all drawings (Family: none) | 1-11 |

Form PCT/ISA/210 (continuation of second sheet) (July 1998)

34